(19) Europäisches Patentamt
European Patent Office
Office européen des brevets

(11) **EP 1 714 368 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(51) Int Cl.:
***H02H 7/122*** *(2006.01)*

(21) Anmeldenummer: **05706724.1**

(22) Anmeldetag: **29.01.2005**

(86) Internationale Anmeldenummer:
**PCT/DE2005/000136**

(87) Internationale Veröffentlichungsnummer:
**WO 2005/078887 (25.08.2005 Gazette 2005/34)**

(54) **SCHALTUNGSANORDNUNG ZUM ÜBERLASTUNGSSCHUTZ EINES ANSTEUERBAREN SCHALTELEMENTS**

CIRCUIT ARRANGEMENT FOR THE OVERLOAD PROTECTION OF A CONTROLLABLE SWITCHING ELEMENT

CIRCUIT DE PROTECTION CONTRE TOUTE SURCHARGE D'UN ELEMENT COMMUTATEUR CONTROLABLE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **14.02.2004 DE 102004007288**

(43) Veröffentlichungstag der Anmeldung:
**25.10.2006 Patentblatt 2006/43**

(73) Patentinhaber: **Conti Temic Microelectronic GmbH**
**90411 Nürnberg (DE)**

(72) Erfinder: **DORNER, Thomas**
**90475 Nürnberg (DE)**

(74) Vertreter: **Büchner, Jörg**
**Conti Temic microelectronic GmbH**
**Sieboldstr. 19**
**90411 Nürnberg (DE)**

(56) Entgegenhaltungen:
EP-A- 0 844 720          US-A- 5 923 210
US-A1- 2002 039 269      US-A1- 2002 105 316

**Beschreibung**

Die Erfindung betrifft eine Schaltungsanordnung zum Schutz eines zwischen einen elektrischen Verbraucher und eine Versorgungsspannung geschalteten und mittels eines Steuersignals ansteuerbaren Schaltelements vor Überlastung im eingeschalteten Zustand.

Üblicherweise kann ein elektrischer Verbraucher mittels eines Schaltelements von der zur Versorgung mit elektrischer Energie vorgesehenen elektrischen Versorgungsspannung getrennt werden. Dabei ist es grundsätzlich möglich, das Schaltelement spannungsseitig (= Highside), also zwischen die elektrische Versorgungsspannung und den Verbraucher, oder masseseitig (= Lowside), also zwischen den elektrischen Verbraucher und das Bezugspotential (= elektrische Masse), anzuordnen. In beiden Fällen wird der Stromfluss durch den elektrischen Verbraucher durch ein Öffnen des Schaltelements unterbrochen.

Ein Beispiel für eine derartige Anwendung ist die Ansteuerung eines bürstenlosen elektronisch kommutierten Gleichstrommotors (= BLDC-Motors bzw. EC-Motors) mittels einer Umrichter-Schaltung, bei der insgesamt sechs Schaltelemente jeweils in Form eines MOSFET-Halbleiterschalters in einer dreiphasigen Brückenschaltung (= sogenannte B6-Brücke) vorgesehen sind. Jeder der insgesamt drei Motorstränge ist mittels zweier dieser Schaltelemente mit dem Versorgungs- und dem Bezugspotential verbunden, sodass drei Schaltelemente spannungsseitig und die anderen drei Schaltelemente masseseitig angeordnet sind. Während des Motorbetriebs sind nun je nach aktuellem Betrachtungszeitpunkt entweder zwei Motorstränge an das Versorgungspotential und ein Motorstrang an das Bezugspotential oder ein Motorstrang an das Versorgungspotential und zwei Motorstränge an das Bezugspotential oder ein Motorstrang an das Versorgungspotential und ein Motorstrang an das Bezugspotential geschaltet. So ergibt sich im eingeschalteten Zustand in den drei Stranginduktivitäten des Gleichstrommotors zu jedem Zeitpunkt ein Stromfluss.

Im eingeschalteten Zustand entsteht in dem Schaltelement eine Verlustleistung, die sich aus dem Produkt der zwischen den beiden Hauptanschlüssen des Schaltelements anstehenden Schaltelementspannung und dem durch das Schaltelement fließenden Strom errechnet. Bei bestimmten Anwendungsfällen ist es wünschenswert, diese Verlustleistung zu überwachen, um eine thermische Zerstörung des Schaltelements zu verhindern. Diese Gefahr besteht insbesondere, wenn in einem Motorstrang ein Kurzschluss mit dem Versorgungs- oder dem Bezugspotential auftritt. Dann würde der Strom in dem fehlerbehafteten Motorstrang und damit auch in mindestens einem der Schaltelemente, über die dieser Motorstrang zugeschaltet ist, einen sehr hohen Wert annehmen. Da der Stromfluss und der Spannungsabfall über den Einschalt-Widerstand (= ON-Widerstand) des Schaltelements miteinander verknüpft sind, resultiert auch ein starker Anstieg der betreffenden Schaltelementspannung.

Folglich lässt sich die Verlustleistung anhand der Schaltelementspannung kontrollieren. Übersteigt die Schaltelementspannung und damit auch die Verlustleistung einen vorgegebenen Grenzwert, sollte das Schaltelement sehr schnell ausgeschaltet werden, um es vor Zerstörung zu schützen. Bekannt sind Schaltungsanordnungen zum Überlastschutz für masseseitig angeordnete Schaltelemente. Sowohl diese Schaltanordnungen zum Überlastungsschutz als auch die Ansteuerschaltung des masseseitig angeordneten Schaltelements sind massebezogen ausgeführt. Dies bedeutet, dass die Eingangs- und Ausgangssignale der Schaltungen und auch zumindest ein großer Teil der innerhalb der Schaltungsanordnungen definierten Schaltungspotentiale auf das Bezugspotential bezogen sind. Dadurch wird eine relativ einfache schaltungstechnische Realisierung möglich.

Bekannt sind weiterhin Schaltungsanordnungen zum Überlastungsschutz eines spannungsseitig angeordneten Schaltelements. Ein Beispiel hierfür ist in der US 5,923,210 beschrieben. Allerdings sind diese Schaltungsanordnungen zum Überwachungsschutz und auch die Ansteuerschaltung des Schaltelements im Wesentlichen versorgungspotentialbezogen ausgeführt. Dies bedeutet, dass die Eingangs- und Ausgangssignale sowie zumindest ein großer Teil der innerhalb der Schaltungsanordnungen definierten Schaltungspotentiale auf das Versorgungspotential bezogen sind. So weist auch insbesondere die am Schaltelement anstehende Schaltelementspannung einen Bezug auf das Versorgungspotential auf. Die Erfassung und Auswertung eines potentialbezogenen Signals ist aber mit einem erhöhten schaltungstechnischen Aufwand verbunden.

Aus der US 2002/0039269 A1 ist ein Leistungsmodul bekannt, dass eine Schaltungsanordnung zum Überlastschutz eines spannungsseitig angeordneten Schaltelements aufweist, wobei die Schaltungsanordnung Speichermittel, Rückkopplungsmittel und Auswertemittel umfasst, die auf verschiede Potentiale bezogen sind.

Die Aufgabe der Erfindung besteht nun darin, eine Schaltungsanordnung zum Schutz eines zwischen einen elektrischen Verbraucher und eine Versorgungsspannung geschalteten und mittels eines Steuersignals ansteuerbaren Schaltelements vor Überlastung im eingeschalteten Zustand anzugeben, die sich mit einem vergleichsweise geringeren schaltungstechnischen Aufwand realisieren lässt.

Die erfindungsgemäße Schaltungsanordnung zum Schutz eines zwischen einen elektrischen Verbraucher und eine Versorgungsspannung geschalteten und mittels eines Steuersignals ansteuerbaren Schaltelements vor Überlastung im eingeschalteten Zustand umfasst mindestens

- Auswertemittel zur Fehlerfall-Ermittlung anhand einer über dem eingeschalteten Schaltelement abfallenden Schaltelementspannung,

- Speichermittel zur Speicherung einer Fehlerfall-Information und zur Generierung eines Fehlersignals und
- Rückkopplungsmittel zur Berücksichtigung des Fehlersignals bei der Ansteuerung des Schaltelements mittels des Steuersignals,

wobei

- die Auswertemittel, die Speichermittel und die Rückkopplungsmittel massebezogen ausgeführt sind.

Die Erfindung beruht dabei auf der Erkenntnis, dass die schaltungstechnische Realisierung sich erheblich vereinfachen lässt, wenn die Schaltungsanordnung größtenteils nicht mit dem ansonsten üblichen Versorgungsspannungsbezug, sondern mit Massebezug ausgeführt ist. Somit ist es also unter Realisierungsgesichtspunkten günstig, die Speicher- und auch die Rückkopplungsmittel massebezogen auszubilden. Um den günstigen Massebezug auf möglichst große Teile der Schaltungsanordnung ausdehnen zu können, ist es insbesondere vorteilhaft bezogen auf den Signalverlauf möglichst bald nach der Erfassung der zu überwachenden Schaltelementspannung eine Pegelwandlung des Versorgungsspannungsbezugs auf einen Massebezug vorzunehmen. Andererseits ist es dementsprechend ebenfalls günstig, eine Rückwandlung des Pegels auf Versorgungsspannungsbezug erst möglichst kurz vor der eigentlichen Ansteuerung des Schaltelements durchzuführen. Auf diese Weise kann ein großer Teil der Schaltungsanordnung mit Massebezug umgesetzt werden, sodass sich der Aufwand reduziert.

Dieses Prinzip ist grundsätzlich auf verschiedene Ausführungsformen des Schaltelements anzuwenden. Es ist sowohl bei einem Halbleiterschaltelement, beispielsweise in Gestalt eines MOSFET-Schalters, als auch bei einem ansteuerbaren elektromechanischen Schaltelement, beispielsweise in Form eines Relais-Schalters, einzusetzen. Andere Schaltelemente sind ebenso möglich, insgesamt lässt sich jeweils eine kostengünstige Schutzfunktion bezüglich einer Überlastung im eingeschalteten Zustand des Schaltelements realisieren.

Vorteilhafte Ausgestaltungen der erfindungsgemäßen Schaltungsanordnung ergeben sich aus den von Anspruch 1 abhängigen Ansprüchen.

Günstig ist eine Variante, bei der die Speichermittel einen Komparator umfassen. Insbesondere ist an einem ersten Komparatoreingang, beispielsweise am Plus-Eingang des Komparators, eine Hystereseschaltung vorgesehen. Dadurch erhält man ähnlich wie bei einem sogenannten Schmitt-Trigger eine obere und eine untere Hystereseschwellspannung. Beide Schwellspannungen sind dabei vorteilhafterweise auf das Bezugspotential (= Masse) bezogen. Die Fehlerfall-Information ist in der aktuell geltenden Hystereseschwellspannung gespeichert. Steht also im eingeschalteten Zustand des zu überwachenden Schaltelements, am ersten Komparatoreingang beispielsweise die obere Hystereseschwellspannung an, so zeigt dies einen fehlerfreien Betriebszustand an. Umgekehrt deutet die untere Hystereseschwellspannung am ersten Komparatoreingang an, dass ein Fehler aufgetreten ist.

Günstig ist es, wenn die Rückkopplungsmittel in Form einer Freigabeeinheit ausgebildet sind. Besonders einfach ist die Realisierung der Freigabeeinheit als Und-Gatter. Ebenso ist es vorteilhaft, wenn die Freigabeeinheit massebezogene Eingangssignale und ein massebezogenes Ausgangssignal aufweist. An einem ersten Freigabe-Eingang kann das von einer Steuereinheit gelieferte Steuersignal anstehen, an einem zweiten Freigabe-Eingang das von den Speichermitteln generierte Fehlersignal. In Abhängigkeit vom Zustand beider Eingangssignale liefert die Freigabeeinheit dann ein Ausgangssignal zur Weiterleitung an einen Steueranschluss des Schaltelements. Grundsätzlich ist es auch möglich, dass die Rückkopplungsmittel ohne eine gesonderte Freigabeeinheit ausgebildet sind. Dann erfolgt die Rückführung des von den Speichermitteln generierten Fehlersignals über die Steuereinheit selbst. Der Informationsgehalt des Fehlersignals wird dann bei der Generierung des Steuersignals durch die Steuereinheit mit berücksichtigt.

Bei einer weiteren Ausgestaltung wird die zu überwachende Schaltelementspannung mittels eines Messelements erfasst. Zumindest im Fehlerfall steht die Schaltelementspannung auch als Messspannung an diesem Messelement, das zwischen einen Hauptanschluss eines Hilfstransistors und die Versorgungsspannung geschaltet ist, an. Dabei ist ein Steueranschluss des Hilfstransistors insbesondere über eine Entkopplungsdiode ebenfalls an den Schaltungsknoten angeschlossen, an dem auch das zu überwachende Schaltelement und der Verbraucher zusammengeschaltet sind.

Günstig ist die Ausgestaltung des Messelements als Messwiderstand. Die anstehende Messspannung folgt dann stets der Schaltelementspannung - und zwar unabhängig davon, ob ein Fehlerfall vorliegt oder nicht. Die der Schaltelementspannung entsprechende Messspannung bewirkt dann, z. B. durch Stromspiegelung, einen proportionalen Spannungsanteil einer an einem zweiten Komparatoreingang, beispielsweise am Minus-Eingang, anstehenden Vergleichsspannung. Diese Vergleichsspannung wird vom Komparator mit der am ersten Komparatoreingang aktuell anstehenden Hystereseschwellspannung verglichen. Ergibt dieser Vergleich, dass die Vergleichsspannung größer als die obere Hystereseschwellspannung ist, so liegt ein Fehlerfall vor und die Speichermittel werden veranlasst, eine entsprechende Fehlerinformation, insbesondere in Gestalt der unteren Hystereseschwellspannung, zu speichern und außerdem ein entsprechendes Fehlersignal zu generieren. Die Entscheidung darüber, ob ein Fehlerfall vorliegt, erfolgt somit ebenfalls im Komparator. Folglich erfüllt der Komparator bei dieser Ausgestaltung eine Doppelfunktion. Er ist Bestandteil sowohl der Speichermittel als auch der Auswertemittel. Die Signale an den Komparatoreingängen und am Komparatorausgang sind insbesondere massebezogen, sodass in dieser Ausgestaltung auch die Auswertemittel vorteilhafterweise massebezogen ausgebildet sind.

Bei einer anderen Ausführungsform enthält das Messelement mindestens eine Messdiode. Dieses Messelement hat eine Diodenschwellspannung, ab der ein Stromfluss über die Messdiode möglich ist. Die Messdiode kann als einfache PN-Diode insbesondere aus dem Halbleitermaterial Silizium ausgeführt sein. Dann ist die Diodenschwellspannung gleich der Diodenknickspannung, die für Silizium typischerweise bei etwa 0,7 V liegt. Eine höhere Diodenschwellspannung lässt sich in einfacher Weise durch eine Hintereinanderschaltung mehrerer derartiger Silizium-PN-Dioden zu einem gemeinsamen Messelement erreichen. Der Wert der Diodenschwellspannung lässt sich auch durch die Wahl des Halbleitermaterials beeinflussen. Alternativ ist außerdem der Einsatz einer Zener-Diode möglich. Die sogenannte Zener-Spannung kann über einen gewissen Spannungsbereich eingestellt werden.

Gemäß einer Variante ist die Messdiode insbesondere Bestandteil einer Pegeluntereinheit der Auswertemittel. In der Pegeluntereinheit wird ein Vergleich der am zu überwachenden Schaltelement anstehenden Schaltelementspannung mit der Diodenschwellspannung vorgenommen. Die Diodenschwellspannung ist insbesondere größer als die Werte der Schaltelementspannung, die sich im normalen, das heißt fehlerfreien, Betriebszustand des eingeschalteten Schaltelements einstellen. Steigt die Schaltelementspannung und damit die an der mindestens einen Messdiode anstehenden Messspannung über den Wert der Diodenschwellspannung, schaltet der Hilfstransistor durch. Der über den Hilfstransistor fließende Strom wird dann zur weiteren Auswertung herangezogen. Die Fehlererkennung wird bei dieser Variante also zumindest hinsichtlich der Amplitude der Schaltelementspannung sehr nahe am zu überwachenden Schaltelement in der Pegeluntereinheit vorgenommen.

Günstig ist eine weitere Ausführungsvariante, bei der die zeitliche Dauer des zu hohen Wertes der Schaltelementspannung beziehungsweise der Messspannung ebenfalls erfasst und ausgewertet wird. Hierdurch wird verhindert, dass auch bei einer nur sehr kurzzeitigen und damit eigentlich unkritischen Überlastung des Schaltelements ein Fehlersignal generiert und in Folge das Schaltelement abgeschaltet wird. Dieser zeitliche Aspekt der Auswertung erfolgt in einer Zeituntereinheit der Auswertemittel. Die Zeituntereinheit enthält insbesondere ein RC-Glied mit einer typischen Zeitkonstanten, die mittels eines RC-Gliedwiderstands und einer RC-Gliedkapazität eingestellt werden kann. Die RC-Gliedkapazität wird im Fehlerfall umgeladen. Dieser Ladevorgang dauert eine gewisse Zeitspanne. Er wird auch nur dann bis zum Ende fortgesetzt, wenn der Fehler und somit die Überlastung des Schaltelements dauerhaft und nicht nur kurzfristig vorliegt. Falls also die an der mindestens einen Messdiode anstehende Messspannung zu lange (= Dauer des Umladevorgangs) größer ist als die Diodenschwellspannung, veranlasst die Zeituntereinheit die Speichermittel zur Speicherung der Fehlerfall-Information und zur Generierung des Fehlersignals.

Bevorzugte Ausführungsbeispiele werden nunmehr anhand der Zeichnung erläutert. Zur Verdeutlichung ist die Zeichnung nicht maßstäblich ausgeführt und gewisse Aspekte sind nur schematisiert dargestellt. Im Einzelnen zeigen:

Fig. 1    einen masse- spannungsseitig mit jeweils drei Schaltelementen beschalteten Motor, wobei die spannungsseitigen Schaltelemente mit Schutzschaltungen versehen sind,

Fig. 2    eine erste Ausführungsform einer der Schutzschaltungen gemäß Fig. 1 in schematisierter Darstellung,

Fig. 3    eine zweite Ausführungsform einer der Schutzschaltungen gemäß Fig. 1 in schematisierter Darstellung,

Fig. 4    eine schaltungstechnische Realisierung der ersten Ausführungsform gemäß Fig. 2, und

Fig. 5    eine schaltungstechnische Realisierung der zweiten Ausführungsform gemäß Fig. 3.

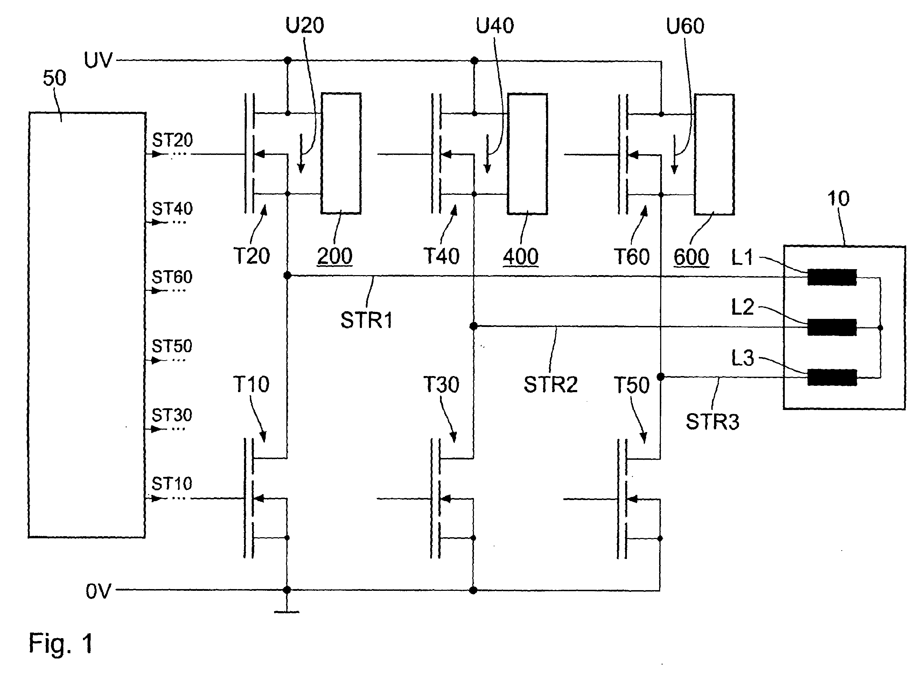

Einander entsprechende Teile sind in den Fig. 1 bis 5 mit denselben Bezugzeichen versehen.

In Fig. 1 ist die Beschaltung eines elektrischen Verbrauchers in Form eines dreiphasigen bürstenlosen elektronisch kommutierten Gleichstrommotors 10, der in seinen drei Motorsträngen STR1, STR2 und STR3 jeweils eine Motorstrangwicklung mit zugehöriger Stranginduktivität L1, L2 bzw. L3 aufweist, gezeigt. Die drei Motorstränge STR1, STR2 und STR3 sind über insgesamt sechs Schaltelemente T10, T20, T30, T40, T50 und T60 an eine elektrische Versorgungsspannung UV und an das Bezugspotential (= Masse = 0 V) angeschlossen. Die Schaltelemente T10 bis T60 sind in einer sogenannten B6-Brückenschaltung, wie in einer Umrichter- oder Gleichrichter-Schaltung üblich, angeordnet. Sie können mittels von einer Steuereinheit 50 zur Verfügung gestellten Steuersignalen ST10, ST20, ST30, ST40, ST50 und ST60 angesteuert, das heißt ein- oder ausgeschaltet werden. Die Schaltelemente T10 bis T60 sind im Ausführungsbeispiel von Fig. 1 jeweils als Halbleiter-Schalter in Form eines MOSFET-Transistorschalters ausgebildet.

Während des Betriebs des Motors 10 sind zu jedem Zeitpunkt zwei oder drei der insgesamt sechs Schaltelemente T10 bis T60 eingeschaltet, sodass stets eine leitende Verbindung zwischen der elektrischen Versorgungsspannung UV über den Motor 10 zum Massepotential besteht. Im eingeschalteten Zustand weisen die Schaltelemente T10 bis T60 einen zwar relativ niedrigen, aber dennoch endlichen Einschalt-Widerstand (= ON-Widerstand) auf. Folglich entsteht auch Verlustleistung, die bei einem zu hohen Anstieg zur Zerstörung des jeweiligen Schaltelements T10 bis T60 führen kann. Um dies zu verhindern, ist es vorteilhaft, Schutzschaltungen zur Überwachung der in den Schaltelementen T10 bis T60 entstehenden Verlustleistung vorzusehen.

Die Verlustleistung kann insbesondere dann einen zu hohen Wert annehmen, wenn ein Fehler beispielsweise in Form eines Kurzschlusses zum Versorgungs- oder zum Bezugspotential in einem der Motorstränge STR1 bis STR3 auftritt. Dies führt zu einem steilen Stromanstieg auch in denjenigen der Schaltelemente T10 bis T60, über die der fehlerbehaftete Motorstrang STR1 bis STR3 an die Versorgungsspannung UV oder an Masse geschaltet ist. Dieser steile Stromanstieg bewirkt einen Anstieg der an dem betroffenen Schaltelement T10 bis T60 zwischen den Hauptanschlüssen abfallenden Schaltelementspannung U20, U40 oder U60. Die Schaltelementspannung U20, U40 oder U60 ergibt sich als Produkt des im jeweiligen Schaltelement T20, T40 bzw. T60 fließenden Stroms mit dem jeweiligen Einschalt-Widerstand. Somit lässt sich diese Schaltelementspannung U20, U40 oder U60 als Kenngröße zur Fehlerfall-Überwachung heranziehen.

Insbesondere Schutzschaltungen zur Überwachung der masseseitig angeordneten Schaltelemente T10, T30 und T50 sind in ihrer schaltungstechnischen Realisierung relativ problemlos. Dies liegt an dem hier gegebenen Massebezug, der auch bei der schaltungstechnischen Umsetzung der jeweiligen Schutzschaltungen verwendet werden kann. Dies bedeutet, dass die in der jeweiligen Schutzschaltung vorgesehenen Signale jeweils auf das Massepotential bezogen werden können.

Demgegenüber sind die Schaltelemente T20, T40 und T60 nicht an Masse, sondern an die Versorgungsspannung UV angeschlossen. Ein Massebezug ist bei den Schaltelementen T20, T40 und T60 nicht gegeben. Dementsprechend sind Schutzschaltungen 200, 400 und 600 für diese Schaltelemente T20, T40 bzw. T60 in ihrer schaltungstechnischen Realisierung aufwendiger. Zumindest in den schaltelementnahen Teilen dieser Schutzschaltungen 200, 400 und 600 ist ein Versorgungsspannungsbezug vorhanden.

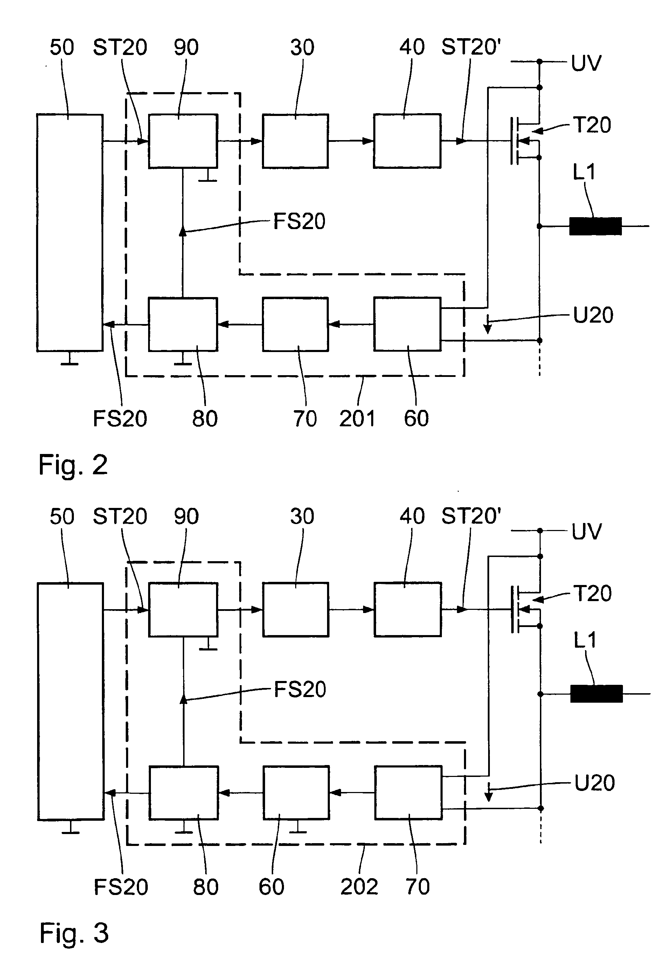

Am Beispiel der Schutzschaltung 200 für das spannungsseitig angeordnete Schaltelement T20 sind in den Fig. 2 und 3 zwei Ausführungsbeispiele von Schutzschaltungen 201 bzw. 202 gezeigt, bei denen der schaltungstechnische Realisierungsaufwand dennoch in vertretbarem Aufwand gehalten werden kann.

Im ersten Ausführungsbeispiel nach Fig. 2 umfasst die Schutzschaltung 201 eine Auswerteeinheit 60, einen Pegelwandler 70, einen Fehlerspeicher 80 und eine Freigabeeinheit 90. In der Auswerteeinheit 60 wird ermittelt, ob die Schaltelementspannung U20 einen zu hohen, das heißt einen fehlerfallanzeigenden Wert annimmt. Diese Auswertung erfolgt noch mit Versorgungsspannungsbezug. Anschließend erfolgt mittels des Pegelwandlers 70 eine Transformation des Bezugs auf Massepotential, sodass in den nachfolgenden Einheiten, also dem Fehlerspeicher 80 und der Freigabeeinheit 90, jeweils mit Massebezug gearbeitet werden kann.

In Abhängigkeit von dem in der Auswerteeinheit 60 ermittelten Ergebnis wird im Fehlerspeicher 80 eine Fehlerfall-Information gespeichert und ein Fehlersignal FS20 generiert. Das Fehlersignal FS20 wird sowohl an die Steuereinheit 50 als auch an die Freigabeeinheit 90 weitergeleitet. Es handelt sich hierbei insbesondere um ein massebezogenes digitales Signal. In der Freigabeeinheit 90 wird das Fehlersignal FS20 mit dem von der Steuereinheit 50 zur Verfügung gestellten und insbesondere ebenfalls massebezogenen digitalen Steuersignal ST20 verknüpft. Die Verknüpfung erfolgt vorzugsweise mittels eines Und-Gatters. Das Ergebnis der Und-Verknüpfung wird über einen weiteren Pegelwandler 30 und eine Treibereinheit 40 als modifiziertes Steuersignal ST20' an einen nicht näher bezeichneten Steueranschluss des Schaltelements T20 geführt.

Im zweiten Ausführungsbeispiel gemäß Fig. 3 ist eine andere Schutzschaltung 202 dargestellt, die sich im Wesentlichen aus den gleichen Teilkomponenten wie die Schutzschaltung 201 zusammensetzt. Der HauptUnterschied besteht in der Reihenfolge der Pegelwandlung und der Auswertung. Bei der Schutzschaltung 202 erfolgt zunächst eine Pegelwandlung mittels des Pegelwandlers 70 und erst danach die Auswertung. Dies hat zur Folge, dass auch die Auswerteeinheit 60 mit dem hinsichtlich der schaltungstechnischen Realisierung sehr günstigen Massebezug ausgeführt werden kann. Der Massebezug ist den Fig. 2 und 3 an den jeweils betroffenen Einheiten schematisch durch ein Massesymbol angedeutet.

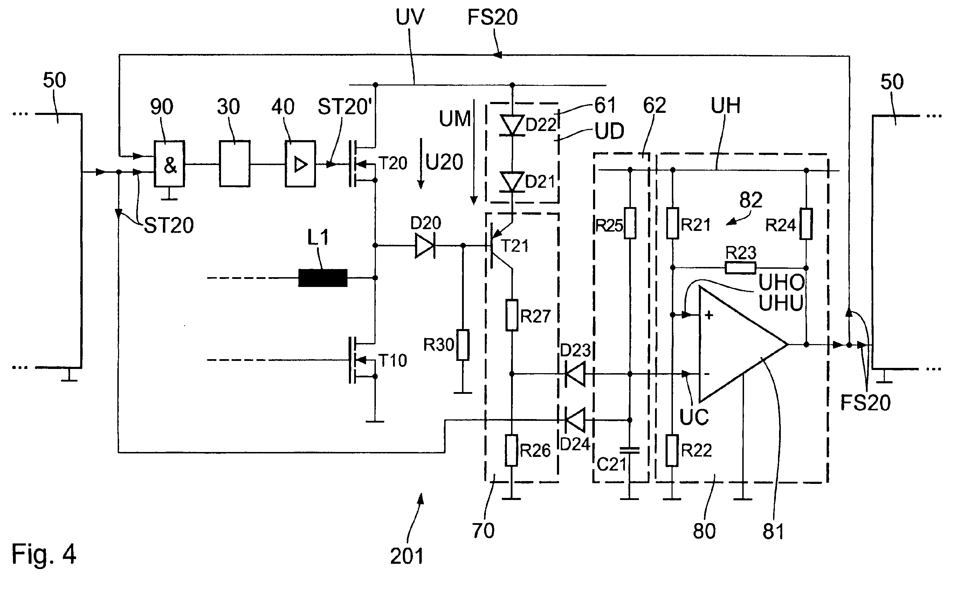

In Fig. 4 ist ein Beispiel für eine schaltungstechnische Realisierung der Schutzschaltung 201 dargestellt. An einen nicht näher bezeichneten Verbindungsknoten, an dem das Schaltelement T20 mit seinem Source-Anschluss an die Stranginduktivität L1 des Motors 10 angeschlossen ist, ist ein Hilfstransistor T21 über eine Entkopplungsschaltung bestehend aus einer Entkopplungsdiode D20 und einem Entkopplungs- und Vorspannwiderstand R30 mit seinem Steueranschluss angeschlossen. Der Hilfstransistor T21 ist im Ausführungsbeispiel als bipolarer PNP-Transistor. Sein Steueranschluss ist durch den Basis-Anschluss gebildet. Der Emitter-Anschluss des Hilfstransistors T21 ist über ein Messelement in Gestalt zweier hintereinander geschalteter Messdioden D21 und D22 an die elektrische Versorgungsspannung UV angeschlossen. Der Kollektor-Anschluss des Hilfstransistors T21 ist über einen optionalen Widerstand R27 und einen Kollektorwiderstand R26 an Masse geführt.

Die beiden Messdioden D21 und D22 sind Bestandteil der Auswerteeinheit 60 und bilden eine Pegeluntereinheit 61. Sie weisen eine Diodenschwellspannung UD entsprechend der Summe ihrer beiden bauelementespezifischen Diodenknickspannungen auf. Im Ausführungsbeispiel sind beide Messdioden D21 und D22 als Silizium-PN-Dioden ausgeführt, die dementsprechend jeweils eine Diodenknickspannung von etwa 0,7 V aufweisen. Der Hilfstransistor T21 bleibt nun solange gesperrt, bis die über dem eingeschalteten Schaltelement T20 abfallende Schaltelementspannung U20 an den beiden Messdioden D21 und D22 eine Messspannung UM hervorruft, die größer als die Diodenschwellspannung UD ist. Dann schaltet der Hilfstransistor T21 durch und die Messspannung UM hat in etwa den gleichen Wert wie die Schaltelementspannung U20, da sich die Diodenknickspannung der Kopplungsdiode D20 mit der Basis-Emitter-Spannung der Basis-Emitter-Diode des Hilfstransistors D21 in etwa egalisiert. Auch die Diode D20 und der Hilfstransistor T21 sind im Beispiel als Silizium-Bauelemente ausgeführt.

Die Entscheidung darüber, ob im zu überwachenden Schaltelement T20 eine zu hohe Verlustleistung entsteht, ergibt sich also aus einem Vergleich der Schaltelementspannung U20 mit der Diodenschwellspannung UD. Letztere lässt sich durch eine Hintereinanderschaltung von weiteren Messdioden variieren. Außerdem kann das Messelement auch als Zener-Diode, die dann allerdings mit verglichen mit den Messdioden D21 und D22 umgekehrter Polarität zwischen den Emitter-Anschluss des Hilfstransistors T21 und die Versorgungsspannung UV geschaltet ist, ausgebildet sein. Die den maximal zulässigen Wert für die Schaltelementspannung U20 festlegende Diodenschwellspannung wäre dann durch die sogenannte Zener-Spannung, die einen festen, aber mittels des ausgewählten Typs der Zener-Diode in gewissen Schranken variierbaren Wert aufweist, bestimmt. Die Diodenschwellspannung UD lässt sich also gut an den gewünschten maximal zulässigen Wert der Schaltelementspannung U20 anpassen.

Liegt der Wert der Schaltelementspannung U20 gemäß Ermittlung in der Pegeleinheit 60 über dem maximal zulässigen Grenzwert (= Diodenschwellspannung UD) fließt ein Strom über die beiden Hauptanschlüsse, also den Emitter- und den Kollektor-Anschluss, des Hilfstransistors T21. Dieser Strom fließt auch über den Kollektorwiderstand R26 und ruft dort einen Spannungsabfall hervor, der diesen Fehlerfall anzeigt. Die Spannung am Kollektorwiderstand R26 ist dabei insbesondere massebezogen. Sie wird für die weitere Auswertung und insbesondere auch für die Fehlerspeicherung herangezogen. Der Hilfstransistor T21 und der Kollektorwiderstand R26 wandeln also im Fehlerfall die an den Messdioden D21 und D22 anstehende versorgungsspannungsbezogene Messspannung UM in ein am Kollektorwiderstand R26 anstehendes, insbesondere massebezogenes Spannungssignal um. Beide Komponenten lassen sich deshalb als Bestandteile des Pegelwandlers 70 interpretieren. Dies ist im Beispiel von Fig. 4 durch die strichlierte Umrandung angedeutet.

Die vom Massepotential abgewandte Anschlussseite des Kollektorwiderstands R26 ist über eine Kopplungsdiode D23 mit einer Zeituntereinheit 62, die ebenfalls Bestandteil der Auswerteeinheit 60 ist, angeschlossen. In der Zeituntereinheit 62 wird ermittelt, ob der zu hohe Spannungswert der Schaltelementspannung U20 über einen längeren Zeitraum ansteht. Nur dann wird von einem das zu überwachende Schaltelement T20 gefährdenden Fehlerfall ausgegangen. Sehr kurzzeitige Überspannungen am Schaltelement T20 werden dagegen ausgeblendet. Die Zeituntereinheit 61 umfasst ein zwischen einer Hilfsspannung UH und Masse geschaltetes RC-Glied mit einer Reihenschaltung eines RC-Gliedwiderstands R25 und einer RC-Gliedkapazität C21. Die Kopplungsdiode D23 ist mit ihrem Anoden-Anschluss an den Verbindungsknoten zwischen dem spannungsseitig angeordneten RC-Gliedwiderstand R25 und der masseseitig angeordneten RC-Gliedkapazität C21 angeschlossen.

Steigt das Potential am Kathoden-Anschluss der Kopplungsdiode D23 aufgrund des Stromflusses durch den Kollektorwiderstand R26 an, so verändern sich auch die Spannungsverhältnisse im RC-Glied und die RC-Gliedkapazität C21 wird mit der Zeitkonstanten $\tau = R25 \times C21$ umgeladen, sofern während dieser Zeitspanne die Schaltelementspannung U20 über dem maximal zulässigen Wert, also der Diodenschwellspannung DU, liegt.

Die an der RC-Gliedkapazität C21 abfallende, insbesondere wiederum massebezogene Spannung wird als Vergleichsspannung UC dem Fehlerspeicher 80 zugeführt. Der Fehlerspeicher 80 enthält als Haupt-Komponente einen ebenfalls an der Hilfsspannung UH betriebenen Komparator 81 mit einem positiven und einem negativen Eingang. Der positive Eingang ist mit einer an sich bekannten Hystereseschaltung 82 aus Hysteresewiderständen R21, R22, R23 und R24 beschaltet. Die Vergleichsspannung UC wird an dem negativen Komparatoreingang eingespeist und vom Komparator 81 mit dem am positiven Komparatoreingang aktuell anstehenden Spannungspegel verglichen. Je nach Ergebnis dieses Vergleiches wird am Ausgang des Komparators 81 das digitale Fehlersignal FS20 generiert.

Das Potential am positiven Komparatoreingang kann bedingt durch die Hystereseschaltung 82 nur zwei stabile Zustände annehmen. Dies ist eine untere und eine obere Hystereseschwellspannung UHU bzw. UHO. Diese beiden Potentialwerte dienen auch der Fehlerfall-Speicherung. Liegt am positiven Komparatoreingang die untere Hystereseschwellspannung UHU an, so ist dies ein Zeichen für einen Fehlerfall. Und umgekehrt zeigt die obere Hystereseschwellspannung UHO den fehlerfreien Zustand an.

Im Beispiel gemäß Fig. 4 hat die Hilfsspannung UH einen Wert von 5 V und die untere und obere Hystereseschwellspannung UHU bzw. UHO einen Wert von 1 V bzw. 4 V. Grundsätzlich können jedoch auch andere Spannungswerte gewählt werden. Demgegenüber liegt der Wert der Versorgungsspannung UV höher. So weist die Versorgungsspannung UV beispielsweise bei einem Anwendungsfall im Kraftfahrzeug-Bereich den für das Bordnetz üblichen Wert von 12 V oder auch 42 V auf. Grundsätzlich sind jedoch auch deutlich höhere Spannungswerte von einigen 100 V und sogar bis über 1000 V für die Versorgungsspannung UV möglich.

Im Folgenden wird die Funktionsweise der in Fi. 4 beschriebenen Schaltungsanordnung näher erläutert. Die Steuereinheit 50 liefert das Steuersignal ST20 in Form eines massebezogenen Digitalsignals. Für den ausgeschalteten Zustand des Schaltelements T20 nimmt das Steuersignal ST20 den Wert 0 V an. Die Und-Verknüpfung der Freigabeeinheit 90 liefert als Ausgangssignal ebenfalls 0 V, sodass dem Steuereingang des Schaltelements T20 über den Pegelwandler 30 und die Treibereinheit 40 ein modifiziertes Steuersignal ST20' zugeführt wird, das das Schaltelement T20 entweder ausschaltet oder im ausgeschalteten Zustand belässt. Das Steuersignal ST20 wird außerdem über eine Rücksetzdiode D24 auf den negativen Komparatoreingang des Komparators 81 gegeben. Aufgrund der Diodenknickspannung der Rücksetzdiode D24 nimmt die Vergleichsspannung UC einen Wert von 0,7 V an, der insbesondere kleiner als beide Hystereseschwellspannungen UHU und UHO ist. Die Spannung am negativen Komparatoreingang ist dann also stets kleiner als die am positiven Komparatoreingang, sodass das Ausgangssignal des Komparators 80 den Wert für die digitale "1", im Beispiel den Spannungswert 5 V, annimmt. Dies wird als Fehlersignal FS20 zur Kontrolleinheit 50 und zur Freigabeeinheit 90 zurückgeführt. Gleichzeitig bewirkt die Hystereseschaltung 82, dass am positiven Komparatoreingang die obere Hystereseschwellspannung UHO (= 4 V) ansteht. Wenn das Steuersignal ST20 den Wert zum Ausschalten des Schaltelements T20 annimmt, wird der Komparator 80 also sicher zurückgesetzt, und es wird (wieder) ein fehlerfreier Zustand angezeigt.

Soll das Schaltelement T20 wieder eingeschaltet werden, nimmt das Steuersignal ST20 den Wert für die digitale "1" (= 5 V) an. Auch die Verknüpfungseinheit 90 liefert dann eine digitale "1" und mittels des Pegelwandlers 30 und der Treibereinheit 40 wird das Schaltelement T20 eingeschaltet. Gleichzeitig wird der bislang am negativen Komparatoreingang anstehende Spannungswert der Vergleichsspannung UC von 0,7 V aufgehoben. Die RC-Gliedkapazität C21 wird über den RC-Gliedwiderstand R25 bis zu einem Wert von:

$$UC_{on} = UH \cdot \frac{R26}{R25 + R26} + UD23 \cdot \frac{R25}{R25 + R26} \qquad (1)$$

umgeladen, wobei mit UD23 die Knickspannung der Kopplungsdiode D23 und mit $UC_{on}$ der stabile Endwert der Vergleichsspannung UC, auf den die RC-Gliedkapazität C21 im fehlerfreien Fall und im eingeschalteten Zustand des Schaltelements D20 aufgeladen wird, bezeichnet ist. Der Spannungswert $UC_{on}$ sollte dabei durch entsprechende Dimensionierung der Widerstände R25 und R26 insbesondere größer als die untere Hystereseschwellspannung UHU (= 1 V) und kleiner als die obere Hystereseschwellspannung UHO (= 4 V) gewählt werden. Der Komparator 80 schaltet dann nicht um und an seinem positiven Komparatoreingang steht weiterhin die den fehlerfreien Zustand anzeigende obere Hystereseschwellspannung UHO an.

Tritt während des eingeschalteten Zustandes ein Fehler auf, so erhöht sich die Schaltelementspannung U20 auf einen Wert über die Diodenschwellspannung UD und es fließt Basisstrom aus dem PNP-Hilfstransistor T21 über den Entkopplungs- und Vorspannwiderstand R30 ab. Der Hilfstransistor T21 leitet Strom und verursacht am Kollektorwiderstand R26 den bereits beschriebenen Spannungsabfall. Es kommt zu einer Umladung der RC-Gliedkapazität C21. Insbesondere wenn der Spannungsabfall am Kollektorwiderstand R26 einen Wert von größer als (UH - UD23) annimmt, fließt kein Strom mehr vom RC-Gliedwiderstand R25 über die Kopplungsdiode D23 und über den Kollektorwiderstand R26 zur Masse. Dann wird die RC-Gliedkapazität C21 letztendlich auf den Wert der Hilfsspannung UH (= 5 V) aufgeladen und die Vergleichsspannung UC am negativen Komparatoreingang nimmt einen größeren Wert als die am positiven Komparatoreingang anstehende obere Hystereseschwellspannung UHO an. Der Komparator 81 schaltet um und gibt ein Fehlersignal FS20 mit einem digitalen Wert "0" (= 0 V) aus. Dieses Fehlersignal FS20 führt über die Freigabeeinheit 90 zu einem Abschalten des Schaltelements T20 und schützt dieses somit vor thermischer Überlastung und Zerstörung. Gleichzeitig wird über die Hystereseschaltung 82 der Wert am positiven Komparatoreingang auf die untere Hystereseschwellspannung UHU (= 1 V) gesetzt, wodurch das Vorliegen eines Fehlerfalls angezeigt wird. Die untere Hystereseschwellspannung UHU bleibt nun solange innerhalb des Fehlerspeichers 80 gespeichert, bis der Komparator 81 von der Steuereinheit 50 durch einen Ausschalt-Befehl (= 0 V) im Steuersignal ST20 zurückgesetzt wird.

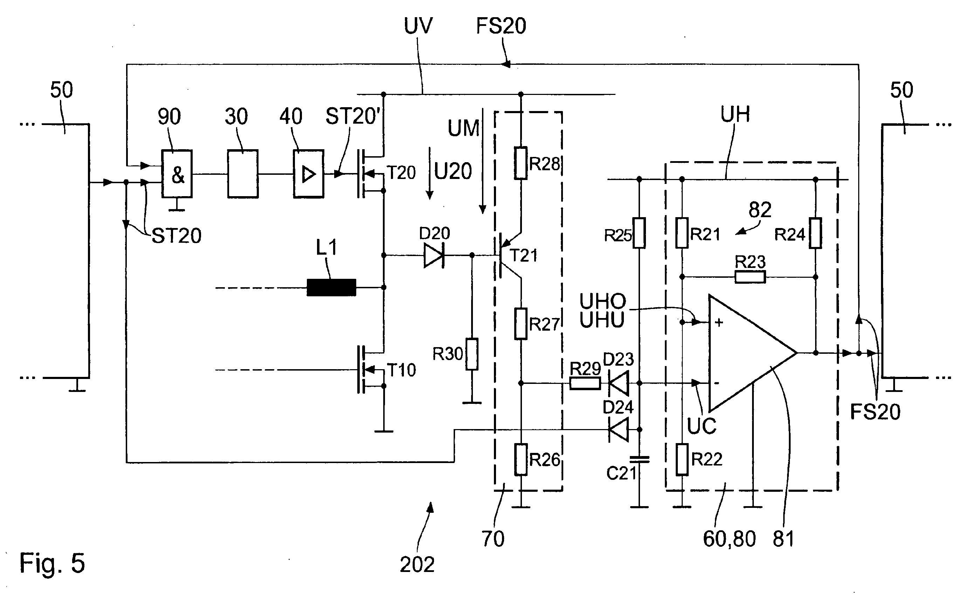

Die schaltungstechnische Realisierung der in Fig. 5 gezeigten zweiten Schutzschaltung 202 unterscheidet sich von der Schutzschaltung 201 im Wesentlichen durch eine andere Ausgestaltung des Messelements. Anstelle der beiden Messdioden D21 und D22 enthält die Schutzschaltung 202 einen Messwiderstand R28, an dem die Messspannung UM abfällt. Dieser auf den ersten Blick nur geringfügige Unterschied führt jedoch zu einer grundsätzlich anderen Funktionsweise der Schutzschaltung 202. Der außerdem zusätzlich vorgesehene Widerstand R29 ist nur optional.

Die Schutzschaltung 201 funktioniert (quasi-)digital. Über die Messdioden D21 und D22 und den Hilfstransistor T21 fließt nur dann Strom, wenn die zu überwachende Schaltelementspannung U20 größer als der maximal zulässige Wert ist. Maßgebliches Entscheidungskriterium für das Vorliegen eines Fehlerfalls ist also, ob ein Stromfluss über die Messdioden D21 und D22 stattfindet oder nicht. Bezogen auf den Stromfluss ist dies im Prinzip eine digitale Entscheidung.

Demgegenüber arbeitet die Schutzschaltung 202 zumindest hinsichtlich des Stromflusses über den Hilfstransistor T21 praktisch analog. Der Hilfstransistor T21 ist nämlich stets leitend (= durchgeschaltet), solange die Schaltelementspannung U20 positiv ist, insbesondere also auch im fehlerfreien Fall bei eingeschaltetem Schaltelement T20. Entscheidend ist hier nicht die Tatsache des Stromflusses allein, sondern vielmehr die Höhe des Stromwerts.

Ähnlich einer Schaltung zur Spannungsspiegelung wird die Schaltelementspannung U20 als Messspannung UM am Messwiderstand R28 eingeprägt. Der durch den Hilfstransistor T21 fließende Strom erzeugt - wie bereits in der Schutzschaltung 201 - am Kollektorwiderstand R26 einen Spannungsanteil, der proportional zur überwachenden Schaltelementspannung U20 ist. Dieser Spannungsanteil ist massebezogen, womit die Einheit aus Messwiderstand R28, Hilfstransistor T21 und Kollektorwiderstand R26 in diesem zweiten Realisierungsbeispiel als der Pegelwandler 70 interpretiert werden kann.

Die RC-Gliedkapazität C21 wird auf einen Wert der Vergleichsspannung UC von:

$$UC = \left( U20 \cdot \frac{R25 \cdot R26}{R28} + UH \cdot (R26 + R29) + UD23 \cdot R25 \right) \cdot \frac{1}{R25 + R26 + R29} \quad (2)$$

aufgeladen. In Gleichung (2) ist der durch die zu überwachende Schaltelementspannung U20 verursachte Anteil deutlich zu erkennen (= erster Summand im Klammerausdruck). Setzt man die Vergleichsspannung UC mit der oberen Hystereseschwellspannung UHO gleich, so lässt sich aus Gleichung (2) ein maximal zulässiger Wert für die Schaltelementspannung U20 ermitteln, oberhalb der die Schutzschaltung 202 eine Abschaltung des zu überwachenden Schaltelements T20 bewirkt. Die maximal zulässige Schaltelementspannung U20, ab der die Schutzschaltung anspricht, hängt insbesondere von dem Messwiderstand R28 ab. Sie lässt sich somit auch mittels dessen Widerstandswert auf eine gewünschte Schwelle dimensionieren.

Über den optionalen Widerstand R27 kann je nach Bedarf der Messbereich der Schaltelementspannung U20 eingeschränkt werden.

Im Fehlerfall steigt die Vergleichsspannung UC letztendlich bedingt durch die ebenfalls steigende Schaltelementspannung U20 an, bis sie den Wert der am positiven Komparatoreingang anstehenden oberen Hystereseschwellspannung UHO überschreitet. Dann schaltet der Komparator 81 um und das Schaltelement T20 wird zum Schutz vor Überlastung über das an die Freigabeeinheit 90 gelieferte Fehlersignal FS20 abgeschaltet. Der Komparator 81 ist bei der Schutzschaltung 202 also zugleich Bestandteil der Auswerteeinheit 60, als auch des Fehlerspeichers 80.

Die beschriebenen Schaltvorgänge finden mit einer wiederum durch den Umladevorgang der RC-Gliedkapazität C21 bedingten zeitlichen Verzögerung statt, so dass es bei einem nur sehr kurzzeitigen Überschreiten des Schwellwerts für die Schaltelementspannung U20 nicht zu einer dann eigentlich überflüssigen Abschaltung des Schaltelements T20 kommt.

Beide Schutzschaltungen 201 und 202 arbeiten bei der schaltungstechnischen Realisierung überwiegend mit massebezogenen Signalpotentialen. Dies führt zu einem erheblich reduzierten Aufwand und wirkt sich günstig auf die Kosten aus.

**Patentansprüche**

**1.** Schaltungsanordnung zum Schutz eines zwischen einem elektrischen Verbraucher (10, L1, L2, L3) und einer Versorgungsspannung (UV) geschalteten und mittels eines Steuersignals (ST20, ST20', ST40, ST60) ansteuerbaren Schaltelements (T20, T40, T60) vor Überlastung im eingeschalteten Zustand umfassend mindestens

- Auswertemittel (60, 61, 62) zur Fehlerfall-Ermittlung anhand einer über dem eingeschalteten Schaltelement (T20, T40, T60) abfallenden Schaltelementspannung (U20, U40, U60),
- Speichermittel (80, 81, 82) zur Speicherung einer Fehlerfall-Information (UHU) und zur Generierung eines Fehlersignals (FS20) und
- Rückkopplungsmittel (90) zur Berücksichtigung des Fehlersignals (FS20) bei der Ansteuerung des Schaltelements (T20) mittels des Steuersignals (ST20'),

**dadurch gekennzeichnet, dass**

- die Auswertemittel (60), die Speichermittel (80, 81, 82) und die Rückkopplungsmittel (90) massebezogen ausgeführt sind.

**2.** Schaltungsanordnung nach Anspruch 1, bei der die Speichermittel (80) einen Komparator (81) beinhalten, wobei der Komparator (81) an einem ersten Komparatoreingang mit einer Hystereseschaltung (82) beschaltet ist, so dass sich eine jeweils auf Masse bezogene obere und untere Hystereseschwellspannung (UHO bzw. UHU) ergibt und die Fehlerfall-Information in der aktuell geltenden Hystereseschwellspannung (UHO, UHU) gespeichert ist.

**3.** Schaltungsanordnung nach Anspruch 1 oder 2, bei der die Rückkopplungsmittel eine Freigabeeinheit (90), insbesondere in Form eines Und-Gatters, mit zwei massebezogenen Freigabe-Eingangssignalen und einem massebezogenen Freigabe-Ausgangssignal, beinhalten.

**4.** Schaltungsanordnung nach einem der vorhergehenden Ansprüche, bei der die Schaltelementspannung (U20) zumindest im Fehlerfall auch als Messspannung (UM) an einem Messelement (R28, D21, D22), das zwischen einen Hauptanschluss eines Hilfstransistors (T21) und die Versorgungsspannung (UV) geschaltet ist, ansteht.

**5.** Schaltungsanordnung nach Anspruch 4, bei der das Messelement einen Messwiderstand (R28) umfasst.

**6.** Schaltungsanordnung nach Anspruch 2 und 5, bei der die am Messwiderstand (R28) anstehende Schaltelementspannung (U20) eine an einem zweiten Komparatoreingang anstehende, auf Masse bezogene Vergleichsspannung (UC) zumindest mit bestimmt, so dass die Speichermittel (80, 81, 82) zur Speicherung der Fehlerfall-Information (UHU) und zur Generierung des Fehlersignals (FS20) veranlasst werden, falls die Vergleichsspannung (UC) größer als die obere Hystereseschwellspannung (UHO) ist.

**7.** Schaltungsanordnung nach Anspruch 4, bei der das Messelement mindestens eine Messdiode (D21, D22) umfasst und eine Diodenschwellspannung (UD) aufweist.

**8.** Schaltungsanordnung nach Anspruch 7, bei der die Auswertemittel (60) eine die mindestens eine Messdiode (D21, D22) umfassende Pegeluntereinheit (61) beinhalten und der Hilfstransistor (T21) durchschaltet, falls die an der mindestens einen Messdiode (D21, D22) anstehende Messspannung (UM) größer ist als die Diodenschwellspannung (UD).

**9.** Schaltungsanordnung nach Anspruch 7 oder 8, bei der die Auswertemittel (60) eine insbesondere ein RC-Glied umfassende Zeituntereinheit (62) beinhalten, wobei die Zeituntereinheit (62) die Speichermittel (80, 81, 82) zur Speicherung der Fehlerfall-Information (UHU) und zur Generierung des Fehlersignals (FS20) veranlasst, falls die an der mindestens einen Messdiode (D21, D22) anstehende Messspannung (UM) zu lange größer als die Diodenschwellspannung (UD) ist.

**Claims**

**1.** A circuit arrangement for the overload protection of a controllable switching element (T20, T40, T60) from overload when activated, said element being connected between an electrical consumer (10, L1, L2, L3) and a supply voltage (UV) and being controlled by a control signal (ST20, ST20', ST40, ST60), comprising at least

 - evaluation elements (60, 61, 62) for determining a malfunction by means of a switching element voltage (U20, U40, U60) that falls across a switching element (T20, T40, T60)
 - memory means (80, 81, 82) for storing malfunction information (UHU) and for generating a malfunction signal (FS20) and
 - feedback means (90) for taking into consideration the malfunction signal (FS20) during the control of the switching element (T20) by means of the control signal (ST20'),

**characterized in that**

 - the evaluation elements (60), the memory means (80, 81, 82) and the feedback means (90) are configured with a reference to ground.

**2.** A circuit arrangement according to claim 1, in which the memory means (80) contain a comparator (81), whereby the comparator (81) is switched on a first comparator input with a hysteresis circuit (82), so that an upper and a lower hysteresis threshold voltage (UHO or UHU) which relates to ground results, and the malfunction information is stored in the currently applicable hysteresis threshold voltage (UHO, UHU).

3. A circuit arrangement according to either of claims 1 or 2, in which the feedback means contain a release unit (90), in particular in the form of an AND gate, with two release input signals which are configured with a reference to ground and one release output signal which is configured with a reference to ground.

4. A circuit arrangement according to any one of the above claims, in which the switching element voltage (U20) is also present, at least when an error occurs, as a measuring voltage (UM) on a measuring element (R28, D21, D22), which is switched between a main connection of an auxiliary transistor (T21) and the supply voltage (UV).

5. A circuit arrangement according to claim 4, in which the measuring element comprises a measuring resistance (R28).

6. A circuit arrangement according to claims 2 and 5, in which the switching element voltage (U20) which is present on the measuring resistance (R28) is at least involved in determining a comparative voltage (UC) which is present on the second comparator input, and which is configured with a reference to ground, so that the memory means (80, 81, 82) are triggered to store the malfunction information (UHU) and to generate the malfunction signal (FS20), should the comparative voltage (UC) be greater than the upper hysteresis threshold voltage (UHO).

7. A circuit arrangement according to claim 4, in which the measuring element comprises at least one measuring diode (D21, D22) and one diode threshold voltage (UD).

8. A circuit arrangement according to claim 7, in which the evaluation elements (60) contain a level sub-unit (61) which comprises at least one measuring diode (D21, D22) and in which the auxiliary transistor (T21) interconnects when the measuring voltage (UM) present on at least one measuring diode (D21, D22) is greater than the diode threshold voltage (UD).

9. A circuit arrangement according to either of claims 7 or 8, in which the evaluation elements (60) contain a time sub-unit (62) which comprises in particular an RC element, whereby the time sub-unit (62) triggers the memory means (80, 81, 82) to store the malfunction information (UHU) and to generate the malfunction signal (FS20) should the measuring voltage (UM) present on at least one measuring diode (D21, D22) be greater than the diode threshold voltage (UD) for too long.

**Revendications**

1. Disposition de circuit pour la protection contre les surcharges en état sous tension d'un élément de commutation (T20, T40, T60) connecté entre un consommateur électrique (10, L1, L2, L3) et une tension d'alimentation (UV) et commandé au moyen d'un signal de commande (ST20, ST20', ST40, ST60), comprenant au moins

- des moyens d'évaluation (60, 61, 62) pour la détermination de cas d'erreur au moyen d'une chute de tension d'élément de commutation (U20, U40, U60) due à l'élément de commutation (T20, T40, T60) sous tension,
- des moyens de mémorisation (80, 81, 82) pour la mémorisation d'une information de cas d'erreur (UHU) et pour la génération d'un signal d'erreur (FS20)
- des moyens de réaction (90) pour la prise en compte du signal d'erreur (FS20) par l'excitation de l'élément de commutation au moyen du signal de commande (ST20'),

**caractérisée en ce que**

- les moyens d'évaluation (60), les moyens de mémorisation (80, 81, 82) et les moyens de réaction (90) étant réalisés avec référencement à la masse.

2. Disposition de circuit selon la revendication 1, sur laquelle les moyens de mémorisation (80) comprennent un comparateur (81), le comparateur (81) étant branché à une première entrée de comparateur par un circuit d'hystérésis (82), de telle sorte qu'une tension de seuil d'hystérésis supérieure et inférieure (UHO ou encore UHU) respectivement référencées à la masse en résultent et que l'information de cas d'erreur est mémorisée dans la tension de seuil d'hystérésis (UHO, UHU) actuellement valable.

3.  Disposition de circuit selon les revendications 1 ou 2, sur laquelle les moyens de réaction comprennent une unité de validation (90), en particulier sous la forme d'une porte ET, avec deux signaux d'entrée de validation référencés à la masse et un signal de sortie de validation référencé à la masse.

4.  Disposition de circuit selon l'une des revendications précédentes, sur laquelle la tension d'élément de commutation (U20) est, au moins en cas d'erreur, appliquée également comme tension de mesure (UM) à un élément de mesure (R28, D21, D22), lequel est connecté entre une borne principale d'un transistor auxiliaire (T21) et la tension d'alimentation (UV).

5.  Disposition de circuit selon la revendication 4, sur laquelle l'élément de mesure comprend une résistance de mesure (R28).

6.  Disposition de circuit selon les revendications 2 et 5, sur laquelle la tension d'élément de commutation (U20) appliquée à la résistance de mesure (R28) détermine au moins en partie une tension de comparaison (UC) référencée à la masse, appliquée à une deuxième entrée de comparateur, de telle sorte que les moyens de mémorisation (80, 81, 82) sont amenés à la mémorisation de l'information de cas d'erreur (UHU) et à la génération du signal d'erreur (FS20), si la tension de comparaison (UC) est plus élevée que la tension de seuil d'hystérésis supérieure (UHO).

7.  Disposition de circuit selon la revendication 4, sur laquelle l'élément de mesure comprend au moins une diode de mesure (D21, D22) et présente une tension de seuil de diode (UD).

8.  Disposition de circuit selon la revendication 7, pour laquelle les moyens d'évaluation (60) comprennent la sous-unité de niveau (61) comprenant au moins une diode de mesure (D21, D22) et le transistor auxiliaire (T21) commute, si la tension de mesure (UM) appliquée à la au moins une diode de mesure (D21, D22) est plus élevée que la tension de seuil de diode (UD).

9.  Disposition de circuit selon les revendications 7 ou 8, pour laquelle les moyens d'évaluation (60) comprennent une sous-unité de temps (62) comprenant en particulier un circuit RC, la sous-unité de temps (62) amenant les moyens de mémorisation (80, 81, 82) à la mémorisation de l'information de cas d'erreur (UHU) et à la génération du signal d'erreur (FS20), si la tension de mesure (UM) appliquée à la au moins une diode de mesure (D21, D22) est plus élevée que la tension de seuil de diode (UD) trop longtemps.

Fig. 1

Fig. 2

Fig. 3

Fig. 4

Fig. 5